# EUROPÄISCHE PATENTSCHRIFT

(11) **EP 2 019 054 B1**
(45) Veröffentlichungstag und Bekanntmachung des Hinweises auf die Patenterteilung: **28.07.2010**
(21) Anmeldenummer: 07450209.7
(22) Anmeldetag: 26.11.2007
(51) Int. Cl.: B65G 21/04, B65G 39/20

(54) **Förderanlage zum Transport von Gütern**
Conveying device for the transportation of goods
Convoyeur destiné au transport de marchandises

(30) Priorität: 24.07.2007 AT 11712007
(43) Veröffentlichungstag der Anmeldung: 28.01.2009
(60) Teilanmeldung: 08021249.1
(73) Patentinhaber: Innova Patent GmbH, 6960 Wolfurt (AT)
(72) Erfinder: Trieb, Herbert, 6911 Lochau (AT)
(74) Vertreter: Atzwanger, Richard

(56) Entgegenhaltungen:
- DE-A1- 4 323 127
- DE-A1- 10 348 516

## Beschreibung

Die gegenständliche Erfindung betrifft eine Förderanlage zum Transport von Gütern mit einem Förderband, welches an den beiden Enden der Anlage über Umlenktrommeln geführt ist und welches an der Unterseite von quer zur Bewegungsrichtung des Förderbandes ausgerichteten und in Bewegungsrichtung des Förderbandes voneinander im Abstand befindlichen Tragbalken befestigt ist, wobei an den beiden seitlichen Enden der Tragbalken jeweils Laufrollen gelagert sind, welche auf zwei längs der Anlage vorgesehenen Paaren von Tragseilen bzw. Tragschienen, die dem vorlaufenden Trum und dem rücklaufenden Trum des Förderbandes zugeordnet sind, abrollen und wobei zumindest bei einem Teil der Tragbalken zwischen der Unterseite der Tragbalken und der Oberseite des Förderbandes eine aus einem elastischen Material bestehende Dichtungsleiste vorgesehen ist.

Bei derartigen Förderanlagen, welche z.B. aus der DE 10348516 A1 bekannt sind, ist das Förderband an der Unterseite der Tragbalken dadurch befestigt, dass über die Länge der Tragbalken mehrere im Abstand voneinander befindliche Schraubbolzen vorgesehen sind, welche die Tragbalken und das Förderband durchsetzen. Da das Förderband in seiner Längsrichtung mit dieses verstärkenden, dicht nebeneinander befindlichen Zugseilen ausgebildet ist, ist es erforderlich, über die Breite des Förderbandes an einigen Stellen keine Zugseile vorzusehen, um hierfür Platz für die Verankerung der Schraubbolzen im Förderband zu schaffen. Aus diesem Grund kann über die Länge der Tragbalken bzw. über die Bereite des Förderbandes nur eine geringe Anzahl von in relativ großem Abstand voneinander befindlichen Schraubbolzen vorgesehen sein. Weiters ist bei dieser bekannten Förderanlage zwischen dem Förderband und dem Tragbalken eine aus einem elastischen Material bestehende Dichtungsleiste vorgesehen, welche dazu dient, ein Eindringen von Fördergut zwischen das Förderband und den Tragbalken zu verhindern.

Diese Art der Befestigung des Förderbandes an den Tragbalken ist jedoch deshalb nicht den Erfordernissen entsprechend, da auch die Dichtungsleiste infolge von Belastungen durch die am Förderband befindlichen Güter zwischen den einzelnen Schraubbolzen von der Unterseite der Tragbalken abgehoben wird, wodurch sich zwischen der Unterseite der Tragbalken und der Oberseite der Dichtungsleiste zwischen den Schraubbolzen jeweils Spalte ausbilden können, in welche Anteile des Fördergutes eindringen. Infolge der ständigen Bewegungen des Förderbandes gegenüber den Tragbalken unterliegen hierdurch der Tragbalken und die Dichtungsleiste an diesen Stellen einem stark erhöhten Verschleiß.

Der gegenständlichen Erfindung liegt somit die Aufgabe zugrunde, die Befestigung des Förderbandes an der Unterseite der Tragbalken zu verbessern, um diesen dem bekannten Stand der Technik anhaftenden Nachteil zu vermeiden. Diese Aufgabe wird erfindungsgemäß dadurch gelöst, dass zumindest bei einem Teil der Tragbalken die Oberseite der Dichtungsleiste mit der Unterseite des zugeordneten Tragbalkens durch Klebung verbunden ist.

Vorzugsweise ist die Unterseite der Dichtungsleiste mit der Oberseite des Förderbandes durch Klebung verbunden.

Gemäß einer Ausführungsvariante sind über die Länge der Tragbalken mehrere Schraubbolzen vorgesehen, mittels welcher das Förderband unter Zwischenlage der Dichtungsleiste an den Tragbalken befestigt ist.

Der Gegenstand der Erfindung ist nachstehend anhand von in den Zeichnungen dargestellten Ausführungsbeispielen näher erläutert. Es zeigen:
- FIG.1: einen Abschnitt einer Transportanlage, in axonometrischer Dar- stellung;
- FIG.2: einen Abschnitt des Förderbandes der Förderanlage gemäß FIG.1, in axonometrischer Darstellung;
- FIG.3: ein erstes Ausführungsbeispiel der Befestigung des Förderban- des an einem Tragbalken, im Querschnitt und
- FIG.4, FIG.4a: zweite Ausführungsbeispiele der Befestigung des Förderbandes an einem Tragbalken, jeweils in Querschnitten.

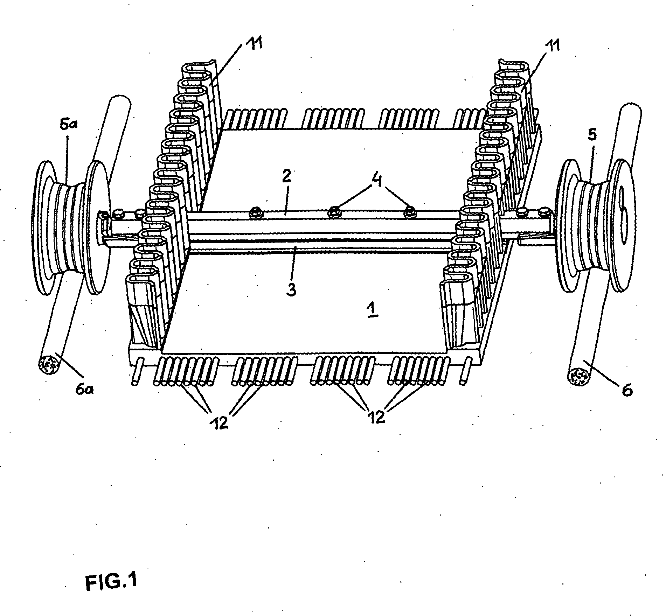

In FIG. 1 ist ein Abschnitt des Förderbandes 1 in einer Förderanlage zum Transport von Gütern dargestellt. Wie daraus ersichtlich ist, ist das Förderband 1 an seinen beiden Seitenrändern mit Wellkanten 11 ausgebildet, durch welche es ermöglicht wird, dieses an den beiden Enden der Förderanlage über Umlenktrommeln zu führen. Wie daraus weiters ersichtlich ist, ist das Förderband 1 mit einer Vielzahl von dicht nebeneinander befindlichen Verstärkungsseilen 12 ausgebildet, aufgrund welcher dieses eine große Tragfähigkeit aufweist. Das Förderband 1 ist an der Unterseite von sich quer zu dessen Bewegungsrichtung erstreckenden Tragbalken 2 befestigt, wobei sich zwischen dem Förderband 1 und den Tragbalken 2 jeweils eine elastische Dichtungsleiste 3 befindet. Die Befestigung des Förderbandes 1 an den Tragbalken 2 erfolgt z.B. mittels das Förderband 1 und die Tragbalken 2 durchsetzender Schraubbolzen 4. Durch die zwischen dem Förderband 1 und den Tragbalken 2 befindlichen Dichtungsleisten 3 wird vermieden, dass sich zwischen dem Förderband 1 und den Tragbalken 2 jeweils Spalte ausbilden, in welche Fördergut eindringt, wodurch das Förderband 1 einem erhöhten Verschleiß unterliegt.

An den beiden Enden der Tragbalken 2 befinden sich Laufrollen 5 und 5a, welche längs eines Paares von Tragseilen 6 und 6a bzw. von Tragschienen geführt sind. Dabei sind sowohl dem mit Transportgut beladenen Trum des Förderbandes 1 als auch dem unbeladenen Trum des Förderbandes 1 jeweils ein Paar von Tragseilen 6 und 6a bzw. von Tragschienen zugeordnet, längs welcher das Förderband 1 zwischen den in den Endstationen befindlichen Umlenk- bzw. Antriebstrommeln im Umlauf bewegt wird.

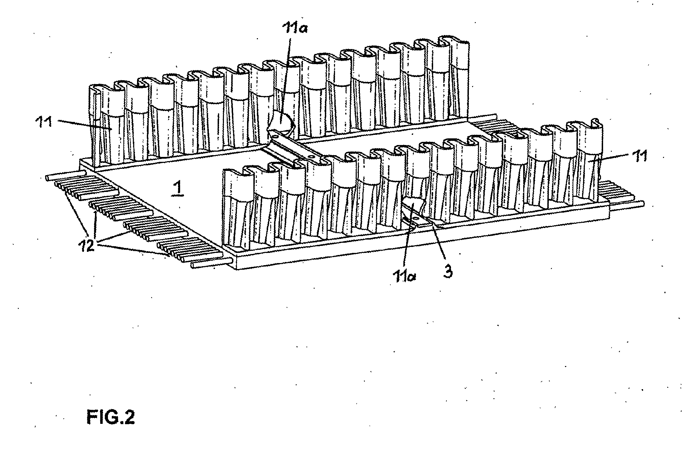

Aus FIG.2 ist ersichtlich, dass die seitlichen Wellkanten 11 mit Ausnehmungen 11a für die Tragbalken 2 ausgebildet sind und dass sich die Dichtungsleisten 3 an der Oberseite des Förderbandes 1 befinden.

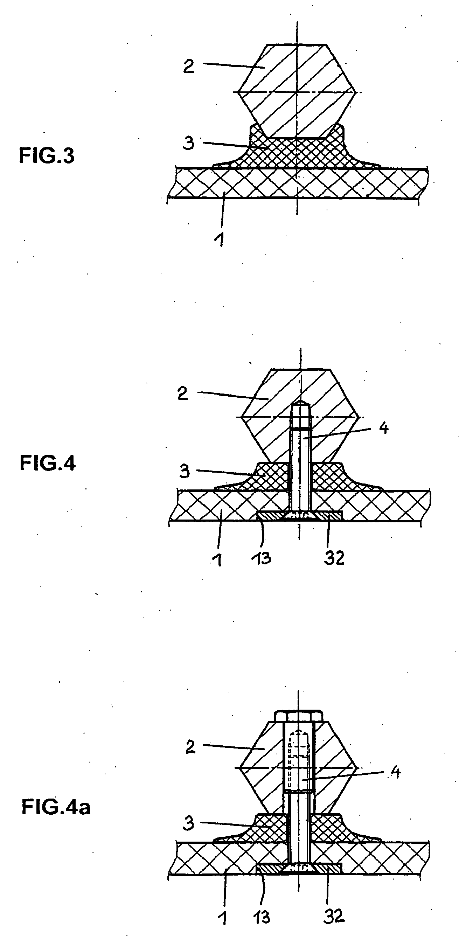

In FIG.3 ist ein erstes Ausführungsbeispiel der Befestigung des Förderbandes 1 an den Tragbalken 2 dargestellt, bei welchem die sich zwischen den Tragbalken 2 und dem Förderband 1 befindlichen Dichtungsleisten 3 sowohl mit dem Förderband 1 als auch mit den Tragbalken 2 durch Klebung verbunden sind. Aufgrund der Elastizität der Dichtungsleisten 3 ist gewährleistet, dass sich zwischen dem Förderband 1 und den Tragbalken 2 keinerlei Spalte ausbilden können.

Beim Ausführungsbeispiel der Befestigung des Förderbandes 1 an den Tragbalken 2 gemäß den FIG.4 und FIG.4a sind an der Unterseite des Förderbandes 1 Nuten 13 vorgesehen, in welchen sich Verstärkungsleisten 32 befinden, durch welche mittels der Schraubbolzen 4, welche die Dichtungsleisten 3, das Förderband 1 und die Verstärkungsleisten 32 durchsetzen, das Förderband 1 unter Zwischenlage der Dichtungsleisten 3 an die Tragbalken 2 über die gesamte Breite des Förderbandes 1 angepresst wird, wodurch gleichfalls die Ausbildung von Spalten zwischen dem Förderband 1 und den Tragbalken 2 ausgeschlossen wird. Auch dabei sind die Dichtungsleisten 3 mit dem Förderband 1 verklebt. Zudem dabei sind die Schraubbolzen 4 so ausgebildet, dass diese jederzeit lösbar sind.

Ergänzend wird darauf verwiesen, dass die Tragbalken 2 im Querschnitt sechseckig sind und dass sie als Vollkörper, also nicht rohrförmig, ausgebildet sind, wodurch sie auch bei einem durch das Transportgut verursachten starken Verschleiß lange Betriebszeiten ermöglichen.

## Patentansprüche

1. Förderanlage zum Transport von Gütern mit einem Förderband (1), welches an den beiden Enden der Anlage über Umlenktrommeln geführt ist und welches an der Unterseite von quer zur Bewegungsrichtung des Förderbandes (1) ausgerichteten und in Bewegungsrichtung des Förderbandes (1) voneinander im Abstand befindlichen Tragbalken (2) befestigt ist, wobei an den beiden seitlichen Enden der Tragbalken (2) jeweils Laufrollen (5, 5a) gelagert sind, welche auf zwei längs der Anlage vorgesehenen Paaren von Tragseilen (6,6a) bzw. Tragschienen, die dem vorlaufenden Trum und dem rücklaufenden Trum des Förderbandes (1) zugeordnet sind, abrollen und wobei zumindest bei einem Teil der Tragbalken (2) zwischen der Unterseite der Tragbalken (2) und der Oberseite des Förderbandes (1) eine aus einem elastischen Material bestehende Dichtungsleiste (3) vorgesehen ist, **dadurch gekennzeichnet, dass** zumindest bei einem Teil der Tragbalken (2) die Oberseite der Dichtungsleiste (3) mit der Unterseite des zugeordneten Tragbalkens (2) durch Klebung verbunden ist.

2. Förderanlage nach Patentanspruch 1, **dadurch gekennzeichnet, dass** die Unterseite der Dichtungsleiste (3) mit der Oberseite des Förderbandes (1) durch Klebung verbunden ist.

3. Förderanlage nach einem der Patentansprüche 1 und 2, **dadurch gekennzeichnet, dass** über die Länge der Tragbalken (2) mehrere Schraubbolzen (4) vorgesehen sind, mittels welcher das Förderband (1) unter Zwischenlage der Dichtungsleisten (3) an den Tragbalken (2) befestigt ist.

## Claims

1. A conveying installation for transporting goods, having a conveyor belt (1), which belt is guided at both ends of the installation over return drums and which is fastened to the underside of supporting beams (2) oriented across the direction of movement of the conveyor belt (1) and located at a distance from one another in the direction of movement of the conveyor belt (1), rollers (5, 5a) being mounted in each case at the two lateral ends of the supporting beams (2), which rollers (5, 5a) run on two pairs of supporting cables (6, 6a) or supporting rails provided along the installation, which pairs are associated with the carrying and return runs of the conveyor belt (1), and a sealing strip (3) consisting of a resilient material being provided between the underside of the supporting beams (2) and the top of the conveyor belt (1) in the case of at least some of the supporting beams (2), **characterised in that**, in the case of at least some of the supporting beams (2), the top of the sealing strip (3) is joined to the underside of the associated supporting beams (2) by adhesive bonding.

2. A conveying installation according to claim 1, **characterised in that** the underside of the sealing strip (3) is joined to the top of the conveyor belt (1) by adhesive bonding.

3. A conveying installation according to one of claims 1 and 2, **characterised in that** over the length of the supporting beams (2) there are provided a plurality of studs (4), by means of which the conveyor belt (1) is fastened to the supporting beams (2) with the sealing strips (3) interposed therebetween.

## Revendications

1. Convoyeur destiné au transport de marchandises, avec une bande transporteuse (1) qui, aux deux extrémités du convoyeur, passe sur des tambours de renvoi et qui est fixée au côté inférieur de poutres (2) orientées transversalement par rapport au sens de déplacement de la bande transporteuse (1) et espacées les unes des autres dans le sens de déplacement de la bande transporteuse (1), étant précisé qu'aux deux extrémités latérales des poutres (2) sont montés des galets (5, 5a) qui roulent sur deux paires, prévues le long du convoyeur, de câbles porteurs (6, 6a) ou de rails porteurs qui sont associés au brin d'avance et au brin de retour de la bande transporteuse (1), et étant précisé que sur une partie au moins des poutres, il est prévu entre le côté inférieur des poutres (2) et le côté supérieur de la bande transporteuse (1) une latte d'étanchéité (3) composée d'un matériau élastique, **caractérisé en ce que** sur une partie au moins des poutres (2), le côté supérieur de la latte d'étanchéité (3) est relié par collage au côté inférieur de la poutre (2) associée.

2. Convoyeur selon la revendication 1, **caractérisé en ce que** le côté inférieur de la latte d'étanchéité (3) est relié par collage au côté supérieur de la bande transporteuse (1).

3. Convoyeur selon l'une des revendications 1 et 2, **caractérisé en ce qu'**il est prévu sur la longueur des poutres (2) plusieurs axes filetés (4) à l'aide desquels la bande transporteuse (1) est fixée aux poutres (2), avec les lattes d'étanchéité (3) placées entre les deux.
